# EUROPÄISCHE PATENTSCHRIFT

(11) **EP 2 479 555 B1**
(45) Veröffentlichungstag und Bekanntmachung des Hinweises auf die Patenterteilung: **13.03.2013**
(21) Anmeldenummer: 10196301.5
(22) Anmeldetag: 21.12.2010
(51) Int. Cl.: G01N 21/03, G01N 21/85, G02B 7/00

(54) **Optischer Analysator mit einer Halterung zum Einbau in einen gasführenden Hohlraum**
Optical analyser with a holder for installation in a gas-bearing cavity
Analyseur optique doté d'un support destiné à l'intégration dans une chambre creuse transportant du gaz

(43) Veröffentlichungstag der Anmeldung: 25.07.2012
(73) Patentinhaber: SICK AG, 79183 Waldkirch (DE)
(72) Erfinder: Schiffler, Ingo, 79115 Freiburg (DE); Matt, Sebastian, 77796, Mühlenbach (DE)
(74) Vertreter: Ludewigt, Christoph

(56) Entgegenhaltungen:
- WO-A2-2010/120603
- US-A- 4 622 465
- US-A1- 2004 232 340

## Beschreibung

Die Erfindung betrifft einen optischen Analysator mit einer Halterung zum Einbau in einen gasführenden Hohlraum.

Bekannt sind optische Analysatoren, insbesondere optische Gasanalysatoren, welche in gasführende Hohlräume eingebaut werden. Die Gasanalysatoren werden dabei in einen Durchbruch in der Wand des gasführenden Hohlraums eingesetzt. Da in den gasführenden Hohlräumen oft Drücke bis zu 20 bar vorhanden sind, ist es erforderlich, dass die Halterungen für entsprechende Drücke ausgelegt sind. Weiterhin ist es erforderlich, dass die Gasanalysatoren eine Halterung aufweisen, über welche die Neigung der Gasanalysatoren in zwei Achsen relativ zu dem gasführenden Hohlraum eingestellt werden kann, da die Halterungen oft nicht mit der erforderlichen Genauigkeit in den Durchbruch des gasführenden Hohlraums eingesetzt, insbesondere eingeschweißt, werden können. Bekannt sind Halterungen, welche mit Hilfe eines Gummibands abgedichtet werden, welches über zwei relativ zueinander kippbare Flanschflächen gespannt wird. Alternativ ist es ebenfalls bekannt, einen O-Ring aus Gummi zwischen zwei Flansche zu legen und die Flanschschrauben entsprechend anzuziehen, bis der gewünschte Neigungswinkel erreicht ist. Derartige Abdichtungen halten jedoch hohen Druckdifferenzen nicht stand.

Bekannt sind weiterhin Halterungen mit zwei Flanschen, zwischen denen ein Metallfaltenbalg eingesetzt ist, wobei die Neigung der zwei Flansche relativ zueinander mit Hilfe von Gewindestangen, Schraubenmuttern und Kontermuttern variiert werden kann. Eine derartige Halterung hat jedoch eine lange Bauform zur Folge. Zudem können sich in den Hinterschnitten des Falkenbalgs im Inneren Staub oder sonstige Verschmutzungen ansammeln. Weiterhin ist eine Reinigung des Falkenbalgs extrem aufwändig.

Schließlich sind Halterungen bekannt, bei welchen ein Kugelsegment in einer einteiligen Kugelpfanne eingesetzt ist. Bei hohen Drücken besteht jedoch die Gefahr, dass das Kugelsegment aus der Kugelpfanne herausgedrückt wird.

Es sind auch Vorrichtungen bekannt, bei denen ein druckdichtes Fenster vor der Justagevorrichtung verhindert, dass hoher Druck oder Verschmutzung aus dem gasführenden Messraum auf die Justageeinrichtung einwirkt. Ein solches Fenster ist aber nachteilig mit hohem Kosten- und Montageaufwand verbunden. Es kann leicht verschmutzen und beeinflusst nachteilig die Optik.

Aus der US 2004/0232340 A1 ist eine Halterung bekannt, bei der der Analysator fest mit einer gasführenden Leitung verbunden ist. In der Halterung ist eine kugelförmige Fensterhalterung vorgesehen, um zur Reinigung des Fensters dieses aus dem eigentlichen Strahlengang herausdrehen und in einer Reinigungskammer reinigen zu können.

Aus der US 4,622,465 ist eine Halterung für ein Quarzdoppelfenster bekannt, das zur Einkopplung von Messlicht in einen flüssigkeitsführenden Hohlraum dient. Dabei ist ein Fenster mit dem Innenraum und das andere Fenster mit dem Außenraum in Kontakt. Jeweils das außen liegende Fenster kann gereinigt werden. Um auch das innenliegende Fenster reinigen zu können, sitzt das Quarzdoppelfenster in einer kugelförmigen Halterung, die in einer aus zwei Kugelsegmenten bestehenden Kugelpfanne gelagert ist, so dass das Quarzdoppelfenster um 180° gedreht werden kann und dann Innen- und Außenfenster ihre Position tauschen.

Die Aufgabe der Erfindung besteht daher darin, einen optischen Analysator mit einer Halterung zum Einbau in einen gasführenden Hohlraum bereitzustellen, wobei die Halterung auch Drücken von bis zu 20 bar standhält, welche jedoch insgesamt einfacher aufgebaut ist und insbesondere einfach zu bedienen und einfach zu reinigen ist.

Die Aufgabe wird erfindungsgemäß gelöst durch einen optischen Analysator mit einer Halterung zum Einbau in einen gasführenden Hohlraum mit den Merkmalen des Patentanspruchs 1.

Vorteilhafte Ausgestaltungen und Weiterbildungen der Erfindung sind in den abhängigen Ansprüchen angegeben.

Der erfindungsgemäße optische Analysator, welcher insbesondere ein optischer Gasanalysator ist, mit einer Halterung zum Einbau des Analysators in einen gasführenden Hohlraum, wobei die Halterung eine Kugelpfanne und ein Kugelsegment mit einer Längsachse aufweist, zeichnet sich dadurch aus, dass die Kugelpfanne wenigstens ein erstes Segment und ein zweites Segment aufweist und derart ausgebildet ist, dass sie das Kugelsegment in Richtung der Längsachse zumindest teilweise umgreift. Unter einem teilweisen Umgreifen ist zu verstehen, dass die Innenfläche der Kugelpfanne beidseitig eines größten Durchmessers des Kugelsegments bei Schnitten senkrecht zur Längsachse des Kugelsegments anliegt. Das Kugelsegment wird somit bei einem teilweisen Umgreifen durch die Kugelpfanne in Richtung der Längsachse fixiert. Somit können insbesondere Kräfte in beide Richtungen entlang der Längsachse aufgenommen werden. Ein Herausdrücken des Kugelsegments aus der Kugelpfanne ist somit nicht mehr möglich. Die Halterung ist damit insbesondere für Drücke von bis zu 20 bar geeignet. Eine ausreichende Dichtigkeit auch bei hohen Drücken wird durch Einbringen von einer oder mehrerer Dichtungen zwischen der Kugelpfanne 20 und dem Kugelsegment 30 gewährleistet.

Die Neigung der Kugelpfanne relativ zum Kugelsegment und damit die Neigung des Analysators relativ zum Hohlraum ist mittels wenigstens zweier Gewindestangen, vorzugsweise mittels vier Gewindestangen, fixierbar, was eine einfache Konstruktion der Halterung ermöglicht.

Vorzugsweise sind die Gewindestangen an einem Ende fest mit der Kugelpfanne verbunden und an ihrem anderen Ende mit Hilfe von Schraubenmuttern an dem Kugelsegment direkt oder indirekt fixierbar. Selbstverständlich ist es ebenfalls möglich, die Gewindestangen an einem Ende an dem Kugelsegment anzuordnen und ihr anderes Ende mit Hilfe von Schraubenmuttern an der Kugelpfanne zu fixieren.

In einer Variante sind an jeder Gewindestange zwei Schraubenmuttern vorgesehen, nämlich eine Schraubenmutter und eine Kontermutter, mit Hilfe derer die Neigung zwischen der Kugelpfanne und dem Kugelsegment eingestellt werden kann. Nachteilig dabei ist jedoch, dass keine stufenlose Einstellung der Neigung möglich ist. Gemäß einer besonders bevorzugten Ausführungsform der Erfindung ist daher zwischen der Kugelpfanne und dem Kugelsegment ein Federelement angeordnet. Es ist somit möglich, lediglich jeweils eine Schraubenmutter pro Gewindestange vorzusehen und diese gegen die Federkraft anzuziehen, um die Neigung zwischen der Kugelpfanne und dem Kugelsegment stufenlos einstellen zu können.

Gemäß einer besonders bevorzugten Ausführungsform der Erfindung ist um wenigstens eine der Gewindestangen zwischen der Kugelpfanne und dem Kugelsegment eine Schraubenfeder oder eine Tellerfeder angeordnet, wodurch auf besonders einfache und kostengünstige Art und Weise eine stufenlose Verstellung der Neigung zwischen der Kugelpfanne und dem Kugelsegment ermöglicht wird.

Ein Ausführungsbeispiel der Erfindung wird anhand der nachfolgenden Figuren ausführlich erläutert. Es zeigt:
- Fig. 1: eine perspektivische Ansicht des Ausführungsbeispiels einer erfindungsgemäßen Halterung und
- Fig. 2: einen Längsschnitt durch die Halterung gemäß Figur 1.

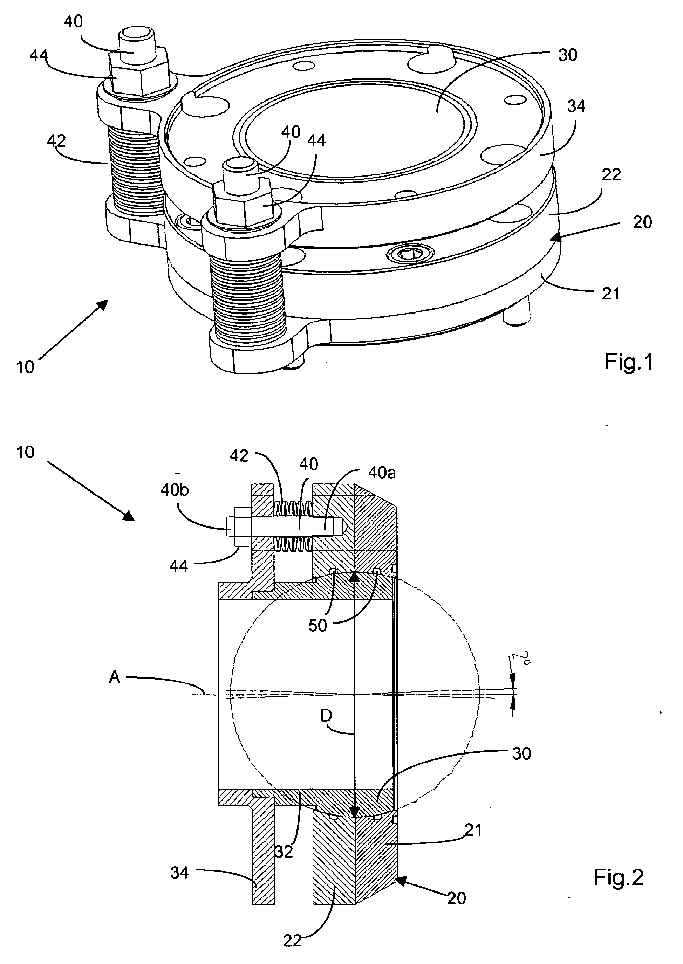

Die Figuren 1 und 2 zeigen eine perspektivische Ansicht und einen Längsschnitt einer Halterung 10 zum Einbau von optischen Analysatoren, insbesondere optischen Gasanalysatoren, in einen gasführenden Hohlraum. Die Halterung 10 weist eine Kugelpfanne 20 und ein in der Kugelpfanne gelagertes Kugelsegment 30 auf. Das Kugelsegment 30 ist dabei mit dem optischen Analysator fest verbunden, während die Kugelpfanne 20 mit der Wandung des gasführenden Hohlraums fest verbunden ist. Durch Verkippen des Kugelsegments 30 in der Kugelpfanne 20 kann somit die Neigung des Gassensors relativ zu dem gasführenden Hohlraum variiert werden, insbesondere in zwei Achsen.

Die Kugelpfanne 20 ist derart ausgebildet, dass sie das Kugelsegment 30 in Richtung der Längsachse A des Kugelsegments 30 zumindest teilweise umgreift. Entlang der Längsachse A des Kugelsegments 30 gesehen, liegt dazu die Kugelpfanne 20 beidseitig eines größten Durchmessers D von Schnitten senkrecht zur Längsachse A des Kugelsegments 30 an dem Kugelsegment 30 an. Die Kugelpfanne 20 fixiert somit das Kugelsegment 30 in Richtung der Längsachse A.

Um das Kugelsegment 30 in die Kugelpfanne 20 einbringen zu können, weist die Kugelpfanne 20 ein erstes Segment 21 und ein zweites Segment 22 auf, zwischen welchen das Kugelsegment 30 eingesetzt wird. Das Kugelsegment 30 kann in der Kugelpfanne 20 verkippt werden, jedoch nach Zusammenfügen der beiden Segmente 21, 22 der Kugelpfanne 20 nicht aus der Kugelpfanne 20 herausgedrückt werden.

An dem Kugelsegment 30 ist ein zylindrischer Abschnitt 32 angeformt, dessen Längsachse mit der Längsachse A des Kugelsegments 30 zusammenfällt. An dem dem Kugelsegment 30 zugewandten freien Ende des zylindrischen Abschnitts 32 ist ein Befestigungsring 34 angeordnet.

Die Neigung des Kugelsegments 30 relativ zur Kugelpfanne 20 wird mittels zweier Gewindestangen 40 fixiert, welche an dem Befestigungsring 34 des Kugelsegments 30 und an dem zweiten Segment 22 der Kugelpfanne 20 angeordnet sind. Die Gewindestangen 40 weisen dabei ein erstes Ende 40a und ein zweites Ende 40b auf, wobei das erste Ende 40a der Gewindestange 40 jeweils fest und unverdrehbar mit dem zweiten Segment 22 der Kugelpfanne 20 verbunden ist. Das zweite Ende 40b der Gewindestangen 40 ist durch eine Durchgangsöffnung des Befestigungsrings 34 geführt. Die relative Lage des Befestigungsrings 34 gegenüber der Gewindestange 40 kann mittels zweier beidseitig des Befestigungsrings 34 auf die Gewindestange 40 gedrehten Muttern fixiert werden. In dem vorliegenden Ausführungsbeispiel ist jedoch zwischen dem zweiten Segment 22 der Kugelpfanne 20 und dem Befestigungsring 34 eine Schraubenfeder 42 vorgesehen, während lediglich auf der dem der Kugelpfanne 20 abgewandten Seite des Befestigungsrings 34 jeweils eine Schraubenmutter 44 auf die Gewindestange 40 aufgedreht ist. Gegen die Federkraft der Schraubenfeder 42 kann die Schraubenmutter 44 auf der Gewindestange 40 angezogen werden, um die relative Lage des Befestigungsrings 34 gegenüber der Gewindestange 40 und somit die Neigung des Kugelsegments 30 gegenüber der Kugelpfanne 20 zu variieren und zu fixieren. Insbesondere ist eine Neigung des Kugelsegments 30 gegenüber der Kugelpfanne 20 um ±2° um die Längsachse A möglich. Dabei ist insbesondere durch Verwendung der Schraubenfeder 42 eine stufenlose Änderung der Neigung möglich.

Durch die Verwendung des Kugelsegments in der Kugelpfanne wird eine kurze Bauform der Halterung 10 ermöglicht, die aufgrund der Fixierung des Kugelsegments 30 entlang der Längsachse A in beide Richtungen auch hohen Drücken von bis zu 20 bar standhält und zudem einfach zu bedienen und einfach zu reinigen ist. Durch Einbringen von einer oder mehrerer Dichtungen 50 in die Innenfläche der Kugelpfanne 20 zwischen der Kugelpfanne 20 und dem Kugelsegment 30 kann auch bei hohen Drücken eine ausreichende Dichtigkeit auch für giftige Gase gewährleistet werden.

>

### Bezugszeichenliste

- 10: Halterung

- 20: Kugelpfanne
- 21: erstes Segment
- 22: zweites Segment

- 30: Kugelsegment
- 32: zylindrischer Abschnitt
- 34: Befestigungsring
- Durchgangsöffnung

- 40: Gewindestange
- 40a: erstes Ende
- 40b: zweites Ende
- 42: Schraubenfeder
- 44: Schraubenmutter

- 50: Dichtung

- A: Längsachse
- D: Durchmesser

## Patentansprüche

1. Optischer Analysator, insbesondere optischer Gasanalysator, mit einer Halterung (10) zum Einbau des Analysators in einen gasführenden Hohlraum, wobei die Halterung (10) eine Kugelpfanne (20) und ein Kugelsegment (30) mit einer Längsachse (A) aufweist, wobei die Kugelpfanne (20) wenigstens ein erstes Segment (21) und ein zweites Segment (22) aufweist und derart ausgebildet ist, dass sie das Kugelsegment (30) in Richtung der Längsachse (A) zumindest teilweise umgreift und wobei zwischen der Kugelpfanne (20) und dem Kugelsegment (30) wenigstens eine Dichtung (50) vorgesehen ist **dadurch gekennzeichnet dass** die Kugelpfanne (20) relativ zum Kugelsegment (30) und damit der Analysator retativ zum Hohlraum, mittels wenigstens zweier Gewindestangen (40) fixierbar ist.

2. Optischer Analysator nach Anspruch 1,
**dadurch gekennzeichnet, dass** die Gewindestangen (40) an einem Ende (40a) fest mit der Kugelpfanne (20) verbunden sind und an ihrem anderen Ende (40b) mit Hilfe von Schraubenmuttern (44) an dem Kugelsegment (30) direkt oder indirekt fixierbar sind.

3. Optischer Analysator nach Anspruch 1 oder 2,
**dadurch gekennzeichnet, dass** zwischen der Kugelpfanne (20) und dem Kugelsegment (30) ein Federelement (42) angeordnet ist.

4. Optischer Analysator nach einem der Ansprüche 2 bis 3,
**dadurch gekennzeichnet, dass** um wenigstens eine der Gewindestangen (40) zwischen der Kugelpfanne (20) und dem Kugelsegment (30) eine Schraubenfeder (42) oder eine Tellerfeder angeordnet ist.

## Claims

1. Optical analyzer, in particular optical gas analyzer, with a mounting (10) for fitting the analyzer to a gas bearing cavity, wherein the mounting (10) comprises a ball socket (20) and a ball segment (30) having a longitudinal axis (A), wherein the ball socket (20) comprises at least a first segment (21) and a second segment (22) and is designed such that it encompasses the ball segment (30) at least partially in the direction of the longitudinal axis (A), and wherein at least one seal (50) is provided between the ball socket (20) and the ball segment (30), **characterized in that** the ball socket (20) can be fixed relative to the ball segment (30) and thus the analyzer relative to the cavity by means of at least two threaded rods (40).

2. Optical analyzer according to claim 1, **characterized in that** the threaded rods (40) are connected tightly to the ball socket (20) with one end (40a) and can be fixed directly or indirectly with its other end (40b) to the spherical segment (30) by means of nuts (44).

3. Optical analyzer according to claim 1 or 2, **characterized in that** a spring element (42) is provided between the ball socket (20) and the ball segment (30).

4. Optical analyzer according to one of claims 2 to 3, **characterized in that** a helical spring (42) or a disc spring is arranged around at least one of the threaded rods (40) between the ball socket (20) and the ball segment (30).

## Revendications

1. Analyseur optique, en particulier analyseur de gaz optique, avec un support (10) pour le montage de l'analyseur dans une cavité comprenant de gaz, dans lequel le support (10) comprend un logement sphérique (20) et un segment sphérique (30) avec un axe longitudinal (A), dans lequel le logement sphérique (20) comprend au moins un premier segment (21) et un second segment (22) et est conçu de telle sorte qu'il englobe la section sphérique (30) au moins partiellement dans la direction de l'axe longitudinal (A), et dans lequel au moins un joint (50) est prévu entre le logement sphérique (20) et le segment de sphère (30), **caractérisé en ce que** le logement sphérique (20) peut être fixé relatif au segment sphérique (30) et ainsi l'analyseur relatif à la cavité par au moins deux tiges filetées (40).

2. Analyseur optique selon la revendication 1, **caractérisé en ce que** les tiges filetées (40) sont reliées solidement au logement sphérique (20) à une extrémité (40a), et à l'autre extrémité (40b) peuvent être fixées directement ou indirectement à la calotte sphérique (30) au moyen d'écrous (44).

3. Analyseur optique selon la revendication 1 ou 2, **caractérisé en ce qu'**un élément de ressort (42) est prévu entre le logement sphérique (20) et le segment de sphère (30).

4. Analyseur optique selon l'une des revendications 2 à 3, **caractérisé en ce qu'**un ressort hélicoïdal (42) ou un ressort à disque est disposé autour d'au moins d'une des tiges filetées (40) entre le logement sphérique (20) et le segment de sphère (30).
